# EUROPEAN PATENT SPECIFICATION

(11) **EP 1 492 372 B1**
(45) Date of publication and mention of the grant of the patent: **17.02.2016**
(21) Application number: 04014962.7
(22) Date of filing: 25.06.2004
(51) Int. Cl.: H04W 48/20, H04W 36/30

(54) **Communication apparatus and sector selecting method for the communication apparatus**
Kommunikationsgerät und Verfahren zur Sektorauswahl für das Kommunikationsgerät
Dispositif de communication et procédé pour choisir un secteur pour le dispositif de communication

(30) Priority: 26.06.2003 JP 2003183364
(43) Date of publication of application: 29.12.2004
(60) Divisional application: 11162688.3
(73) Proprietor: Lenovo Innovations Limited (Hong Kong), Quarry Bay, Hong Kong (HK)
(72) Inventor: Arimitsu, Kazuhiro, Minato-ku, Tokyo (JP)
(74) Representative: Baronetzky, Klaus

(56) References cited:
- EP-A1- 0 685 974
- GB-A- 2 316 836
- US-A- 5 678 185
- US-A1- 2002 068 569

## Description

### Background of the Invention:

This invention relates to a communication apparatus for use in a mobile telephone apparatus, a mobile information communication terminal, and so on, and a communication system including the communication apparatus and, in particular, to a communication apparatus, a communication system, and a sector selecting method for the communication apparatus, which are capable of selecting a sector suitable for connection.

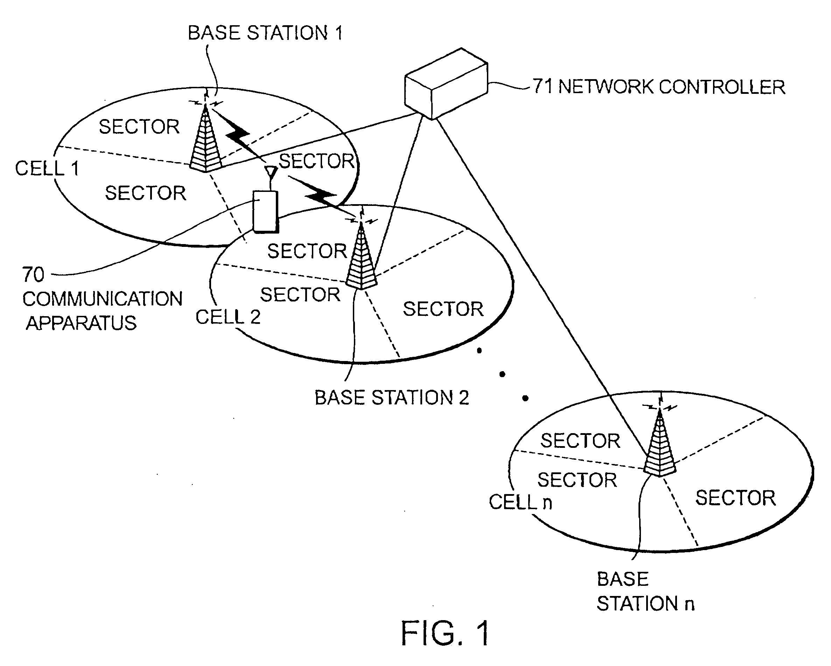

In present-day mobile information communication services, such as a mobile telephone, cellular communication is used. As illustrated in Fig. 1, a typical cellular communication system includes a mobile communication apparatus 70 used by a user, a plurality of base stations (1, 2, ..., n) to be connected to the mobile communication apparatus 70, and a network controller 71 connected to the base stations (1, 2, ..., n).

As illustrated in Fig. 1, a service area of the cellular communication is covered by a plurality of radio zones or cells assigned to the base stations (1, 2, ..., n) for communication with the mobile communication apparatus 70, respectively. Each cell comprises a plurality of sectors corresponding to a plurality of directional antennas of the base station, respectively. The mobile communication apparatus 70 is connected to a suitable one of the directional antennas, i.e., a suitable one of the sectors, depending upon a position of the mobile communication apparatus 70. Thus, mobile communication can be carried out. Therefore, it is important that the mobile communication apparatus 70 maintains connectipn with a particular sector which can provide stable communication and assure a high reception quality in any state, i.e., during standby, during call origination, during call reception, and during communication. Following movement, it is necessary to select a suitable sector to be connected and to switch connection to the suitable sector.

As a sector selecting method presently used, there is known a method comprising the steps of comparing reception levels of a plurality of sectors and selecting a particular sector having a greatest reception level. For example, a mobile communication apparatus using CDMA (Code Division Multiple Access) as one of the cellular communication recognizes a plurality of sectors during standby. The mobile communication apparatus is connected to one of the sectors as an active sector (which will hereinafter be referred to as A_SECTOR) and monitors each of the remaining sectors as a monitor sector (which will hereinafter be referred to as M-SECTOR). The mobile communication apparatus compares reception levels Ec/No (the ratio of reception power per chip to power density in the band) of A_SECTOR and each M_SECTOR by the use of a parameter given by the network controller. When the reception level of M_SECTOR exceeds the reception level of A_SECTOR (hereinafter referred to as "upon establishment of a sector (or level) switching condition"), a sector switching operation is carried out through the network controller.

However, the above-mentioned method is not suitable if the mobile communication apparatus is used under an environment in which a sector dramatically changed in reception level is present, for example, during driving, in an urban center, and at a busy street densely built up.

This is because, in case where such sector dramatically changed in reception level is present, the sector switching condition is frequently established so that the sector switching operation is frequently carried out. In the sector switching operation, communication for the switching operation occurs between the base station and the mobile communication apparatus. In view of a reduction of a network load, effective use of a line capacity, and a decrease in power consumption of the mobile communication apparatus, a frequency of the sector switching operation is preferably suppressed as low as possible.

Also, in view of improvement of a data communication rate in a data communication service, the frequency of the sector switching operation is desirably suppressed as low as possible.

As a sector switching method in CDMA, a technique called soft handover is known. In the soft handover, the mobile communication apparatus is connected to a plurality of sectors at an intermediate stage of the sector switching operation so as to continuously keep a state where the mobile communication apparatus is connected to at least one sector. In other words, the sector switching operation can be carried out without interrupting data communication. For example, a dedicated transport channel (DCH) as a transport channel in WCDMA (Wideband CDMA) has a soft handover function.

In WCDMA, however, not all transport channels have the soft handover function. At the transport channels without the soft handover function, data communication is interrupted upon the sector switching operation and started again after completion of the sector switching operation. Therefore, in case where the data communication is carried out by the use of such transport channels, for example, a forward access channel (FACH), a random access channel (RACH), a common packet channel (CPCH), and a downlink shared channel (DSCH), the data communication is interrupted during the sector switching operation. In view of the above, by suppressing the number of times of the sector switching operation during a predetermined time period, the amount of data transmitted and received during the predetermined time period is increased. In other words, the data communication rate is increased.

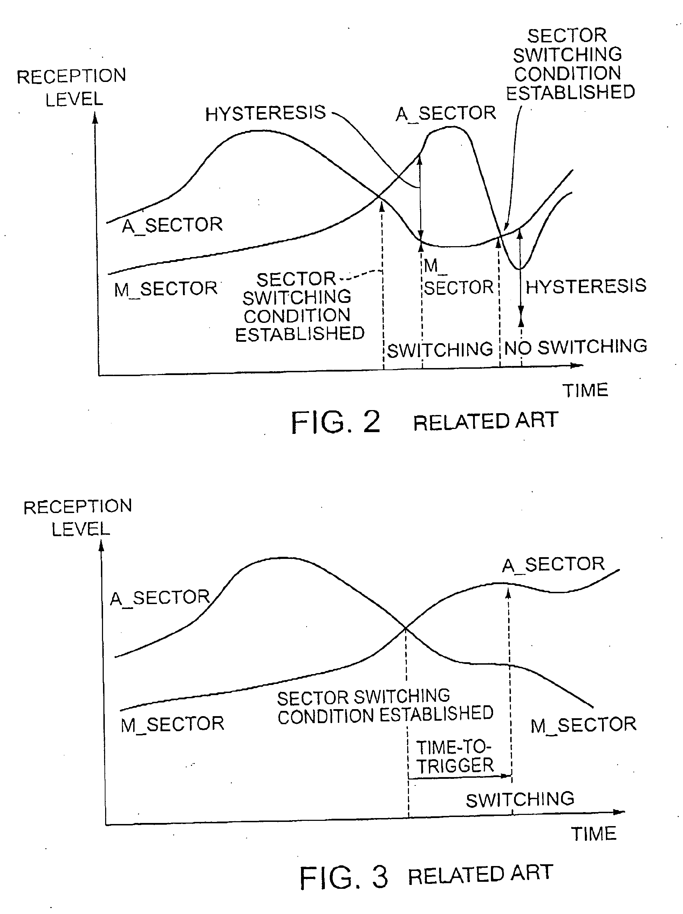

On the other hand, there is known another method in which not only the reception levels of a plurality of sectors are merely compared but also hysteresis of the reception levels and time-to-trigger are taken into consideration. This method is disclosed in 3rd Generation Partnership Project, Technical Specification, 3GPP TS25.331 V3.14.0 (2003-03). Referring to Fig. 2, a technique considering the hysteresis will be described. In the technique considering the hysteresis, the sector switching operation is carried out only if the reception level of M_SECTOR exceeds the reception level of A_SECTOR (upon establishment of the level switching condition) and thereafter a difference between the reception level of M_SECTOR and the reception level of the A_ SECTOR exceeds a predetermined value. Referring to Fig. 3, a technique considering the time-to-trigger will be described. In the technique considering the time-to-trigger, the sector switching operation is carried out after lapse of a predetermined time period from a sector switching timing determined by the establishment of the level switching condition or by further considering the hysteresis. In the above-mentioned method, the frequency of the sector switching operation can be suppressed as compared with the method of merely comparing the reception levels.

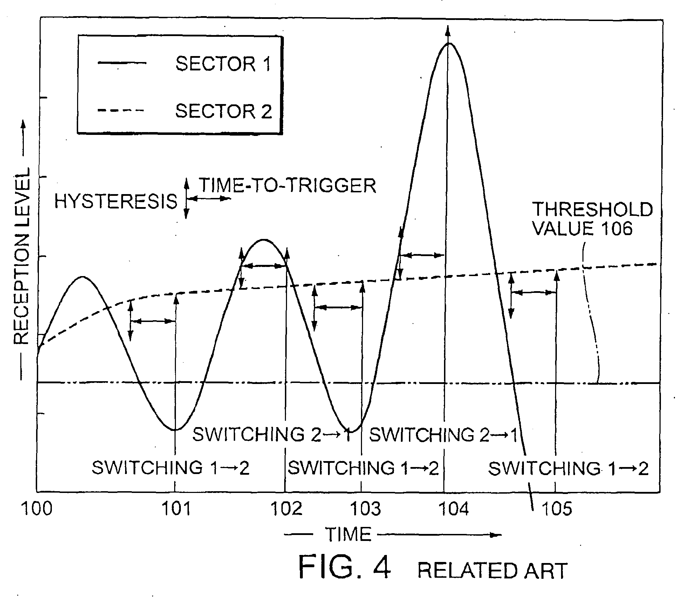

However, even if the hysteresis and the time-to-trigger are used, the frequency of the sector switching operation can not be sufficiently suppressed in case where a sector 1 dramatically changed in reception level and another sector 2 stable in reception level are present as shown in Fig. 4. In Fig. 4, the reception levels of the sector 1 and the sector 2 are depicted by a solid line and a dotted line, respectively.

It is assumed here that the sector 1 is selected at a time instant 100 in Fig. 4. It is also assumed that, if the mobile communication apparatus is connected to a sector having a reception level not lower than a threshold value 106 in Fig. 4, a probability of success of a call originating operation or a call receiving operation is sufficiently high without any problem in practical use. If this method is used, the sector switching operation is carried out at time instants 101, 102, 103, 104, and 105 in Fig. 4 and the sector 2 is finally selected. In this case, however, it is desired to continuously select the sector 2 having a reception level stabilized at a sufficiently high level, although the reception level of the sector 2 is temporarily lowered as compared with the sector 1. This is because selection of the sector 1 by the unnecessary sector switching operations causes a state where the reception level is not sufficiently high (for example, immediately before the time instants 101, 103, and 105). Such state brings about an increase in failure of the call originating operation or the call receiving operation and a decrease in communication quality, such as in increase in call loss.

Further, there is still another method in which the level switching condition is judged by using time averages of the reception levels of a plurality of sectors and further considering the hysteresis, as disclosed in Japanese Patent Application Publication (JP-A) No. H5-41689. In this method, however, it is impossible to sufficiently suppress the frequency of the sector switching operations like the above-mentioned method considering the hysteresis and the time-to-trigger.

Further, in a method disclosed in Japanese Patent Application Publication (JP-A) No. H5-91038, connection with a particular sector is stopped at a time instant when a reception level of the particular sector becomes smaller than a predetermined threshold value and the threshold value is changed by a fluctuation of the reception level of the sector. However, in this method, the threshold value is lowered in case where the fluctuation of the reception level of the sector is large, so as to maintain the connection at a low reception level. Therefore, in this method also, it is impossible to continuously select the sector having a reception level stabilized at a sufficiently high level in such situation illustrated in Fig. 4.

In US 5,678,185 a trend in signal quality together with other factors are used in determining if a handover is appropriate.

As described above, in the cellular communication, it is important that the mobile communication apparatus maintains connection with a particular sector which can provide stable communication and assure a high reception quality in any state, i.e., during standby, during call origination, during call reception, and during communication. Following movement, it is necessary to select a suitable sector to be connected and to switch connection to the suitable sector.

However, in the sector switching operation, communication for the switching operation occurs between the base station and the mobile communication apparatus. In view of a reduction of a network load, effective use of a line capacity, and a decrease in power consumption of the mobile communication apparatus, the frequency of the sector switching operation is preferably suppressed as low as possible.

In view of improvement in communication rate of data communication using a channel in which the sector switching operation by soft handover is not carried out, for example, a forward access channel (FACH), a random access channel (RACH), a common packet channel (CPCH), and a downlink shared channel (DSCH) in WCDMA, it is desired to suppress the frequency of the sector switching operation as low as possible.

Further, in view of prevention of a decrease in communication quality such as increase in call loss, it is desired to continuously select a stable sector without selecting an unstable sector exhibiting a dramatic change, such as temporary elevation, in reception level.

In the conventional methods of judging the sector switching operation, unnecessary sector switching operations are frequently carried out in a situation where a sector dramatically changed in reception level is present, for example, during driving, in an urban center, and at a busy street densely built up.

### Summary of the Invention:

It is an object of this invention to provide a communication apparatus which is capable of suppressing a frequency of a sector switching operation and continuously selecting a suitable sector more stable in signal level in a situation where some of the sectors are dramatically changed in reception level.

It is still another object of this invention to provide a sector selecting method for the above-mentioned communication apparatus.

The invention provides a communication apparatus according to claim 1 and a sector selecting method for a communication apparatus according to claim 3.

Therefore, as compared with the case where selection is based only upon comparison of the reception levels, this invention has an effect that the frequency of the sector switching operation is suppressed and the suitable sector more stable in reception level is continuously selected. Further, by considering a plurality of kinds of variation patterns, the effect is improved.

As a result, it is possible to provide a communication apparatus and a sector selecting method for a communication apparatus, which are capable of suppressing a frequency of a sector switching operation and continuously selecting a suitable sector more stable in signal level.

### Brief Description of the Drawing:

Fig. 1 is a view for describing a structure of a typical cellular communication system;
Fig. 2 is a view for describing a conventional technique using hysteresis;
Fig. 3 is a view for describing another conventional technique using time-to-trigger;
Fig. 4 is a view for describing a conventional sector selecting method;
Fig. 5 is a view for describing a structure of a cellular communication apparatus according to an embodiment of this invention;
Fig. 6 is a flow chart for describing an operation of the cellular communication apparatus illustrated in Fig. 5;
Fig. 7 is a view showing a relationship between a sector switching operation and time changes in reception level and in average in the embodiment of this invention;
Fig. 8 is a view showing time change in variation amount of the reception level in the embodiment of this invention;
Fig. 9 is a view showing time change in variation direction of the reception level in the embodiment of this invention; and
Fig. 10 is a table showing various combinations of signal variation patterns and sector selection criteria applicable in the embodiment of this invention.

### Description of the Preferred Embodiment:

Now, description will be made of an embodiment of this invention with reference to the drawing. However, a technical scope of this invention is not restricted by the embodiment.

Referring again to Fig. 1, a typical communication system to which this invention is applicable will be described. However, Fig. 1 shows only essential components required for description of the embodiment of this invention. A communication system of this embodiment is generally same in structure as the typical communication system except several characteristics specific to this invention. The communication system according to the embodiment of this invention is a CDMA radio access network system which includes a communication apparatus 70 used by a user, a plurality of base stations (1, 2, ..., n) to be connected to the communication apparatus 70, and a network controller 71 connected to the base stations (1, 2, ..., n). Each of the base stations (1, 2, ..., n) has a radio zone or cell for communication with the communication apparatus 70. A service area of the communication system is covered by a plurality of the cells. Each cell comprises a plurality of sectors corresponding to a plurality of directional antennas of the base station. The communication apparatus 70 is connected to a suitable one of the directional antennas, i.e., a suitable one of the sectors depending upon a position of the communication apparatus 70. Thus, mobile communication can be carried out. With reference to a report transmitted from the communication apparatus 70 through the base stations (1, 2, ..., n), the network controller 71 selects one of the sectors as a selected sector suitable for connection with the communication apparatus 70 and switching over to the selected sector is carried out.

In this embodiment, each cell comprises three sectors. However, the number of the sectors constituting each cell is not restricted to three. Further, the number of sectors constituting each cell is not restricted to a plural number but may be a unity. In other words, the cells and the sectors may be in one-to-one correspondence to each other.

In this embodiment, switching over to the selected sector suitable for connection is carried out immediately. However, switching need not necessarily be carried out immediately. For example, the selected sector suitable for connection may be treated as one of candidate sectors to be connected to the communication apparatus 70. Upon switching, a sector of a particular cell may be switched to a different sector of a different cell or may be switched to a different sector of the same cell.

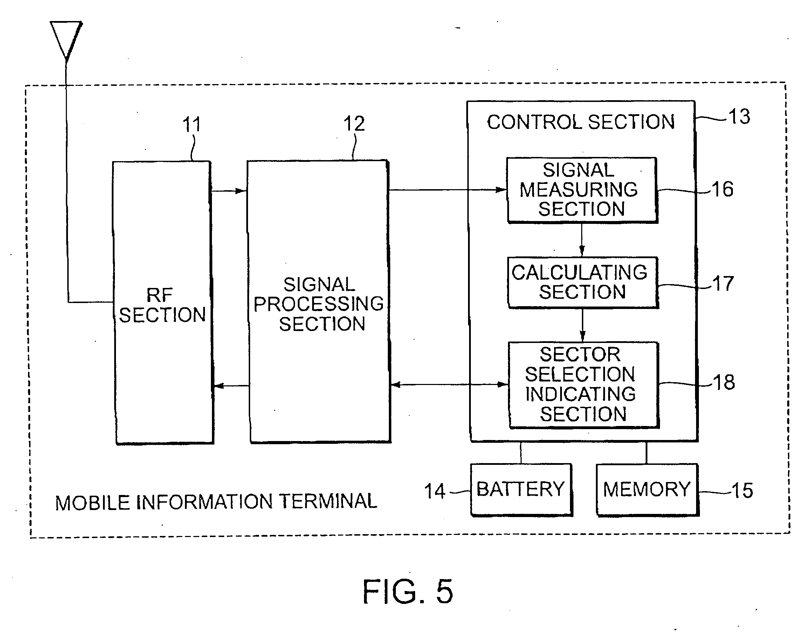

Referring to Fig. 5, the communication apparatus used in the communication system of this embodiment will be described. In the figure, only components required to describe the embodiment of this invention are shown. The communication apparatus of this embodiment is a mobile information terminal for transmitting and receiving a speech signal and a data signal in CDMA. The mobile information terminal comprises an RF section 11, a signal processing section 12, a control section 13, a battery 14, and a memory 15. In the mobile information terminal, the RF section 11 down-converts a frequency of a reception signal and A/D converts the reception signal. Further, the RF section 11 D/A converts a transmission signal and up-converts a frequency of the transmission signal. The signal processing section 12 despreads and decodes the reception signal supplied from the RF section 11 and encodes and spreads the transmission signal supplied from the RF section 11. The control section 13 controls a decoded signal or an encoded signal from the signal processing section 12 and controls an operation of the communication apparatus (mobile information terminal).

The control section 13 comprises a signal measuring section 16, a calculating section 17, and a sector selection indicating section 18. In the control section 13, the signal measuring section 16 measures reception levels (Ec/No: the ratio of reception power per chip to power density in the band) of signals of the sectors. The calculating section 17 compares the reception levels measured by the signal measuring section 16 and calculates signal variation patterns. With reference to the signal variation patterns calculated by the calculating section 17, the sector selection indicating section 18 indicates a particular sector to be connected.

In this embodiment, a primary common pilot channel (Primary CPICH) is used as the signal of the sector. Herein, the Primary CPICH is only one channel for each sector and is scrambled by a primary scrambling code specific to each sector. It is assumed here that the communication apparatus (mobile information terminal) is connected to a single sector and carries out data communication.

In this embodiment, the reception level is used as a parameter measured by the signal measuring section 16. However, use may be made of a different parameter representative of a state of the signal of the sector. For example, a signal-to-interference ratio (SIR) may be used.

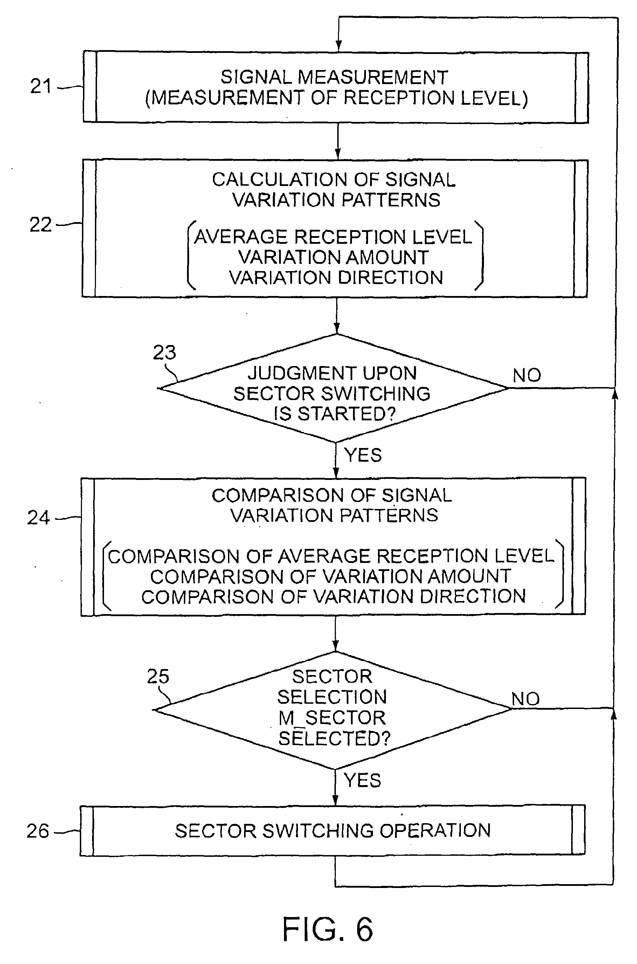

Referring to Fig. 6, an operation of the control section 13 of the mobile information terminal will be described. The signal measuring section 16 measures the reception levels of the sectors at a predetermined time interval (step 21). The calculating section 17 calculates the signal variation patterns of the sectors with reference to measurement results of the reception levels every time when the reception levels are measured in the step 21 (step 22).

In this embodiment, an average reception level (hereinafter simply be referred to as an average), a variation amount of the reception level (hereinafter simply be referred to as a variation amount), and a variation direction of the reception level (hereinafter simply be referred to as a variation direction) are adopted as the signal variation patterns.

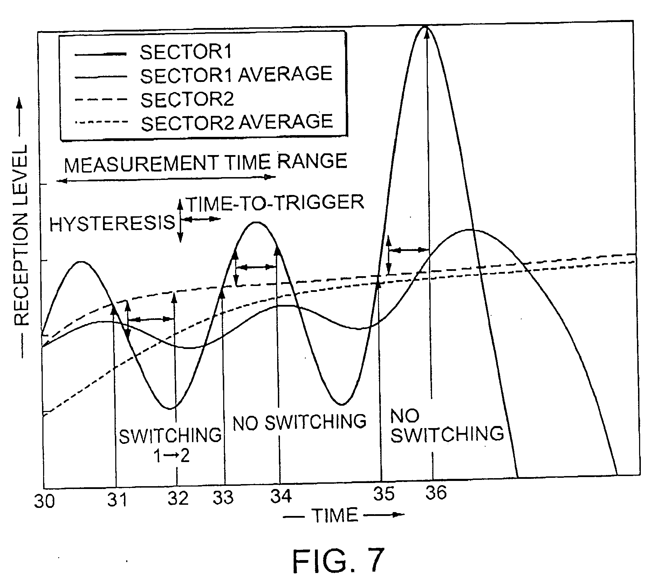

The average is a moving average of the reception level over a predetermined time range. Fig. 7 shows an example of time change of each of the reception level and the average with respect to each of the sectors. For example, attention will be directed to the sector 1. As compared with the change in reception level (thick solid line), the change in average (thin solid line) is small and is delayed.

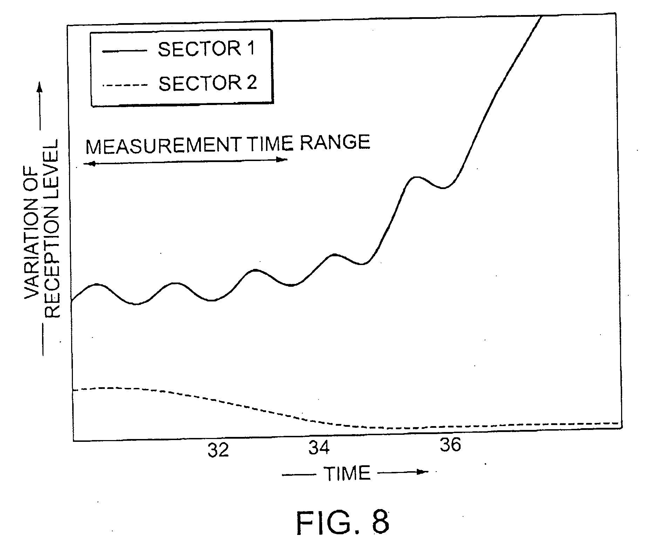

The variation amount is obtained by calculating a difference between a current measured value and a previous measured value of the reception level and summing up absolute values of the differences over the predetermined time range. Fig. 8 shows time change in variation amount corresponding to the time change in reception level in Fig. 7. For example, attention will be directed to the sector 1. As the reception level (thick solid line) in Fig. 7 is increased in amplitude from a time instant 34 towards a time instant 36, the variation amount (thick solid line) in Fig. 8 is increased.

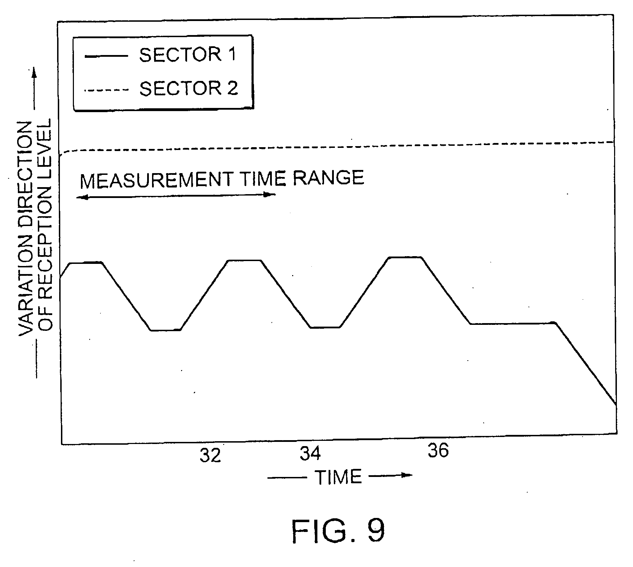

The variation direction is obtained as a count of the number of times the current measured value of the reception level is greater than the previous measured value, i.e., the number of times the reception level is changed in an increasing direction over the predetermined time range. Fig. 9 shows time change in variation direction corresponding to the time change in reception level in Fig. 7. For example, attention is directed to the sector 1. As the reception level (thick solid line) in Fig. 7 is repeatedly increased and decreased, the variation direction (solid line) in Fig. 9 is repeatedly increased and decreased also. The variation direction (dotted line) of the sector 2 in Fig. 9 is constant. This means that the reception level (thick dotted line) in Fig. 7 is monotonously increased.

In this embodiment, the signal variation patterns are calculated every time when the reception levels are measured in the step 21. However, the signal variation patterns need not necessarily be calculated every time when the reception levels are measured, but may be calculated at a predetermined time interval.

In this embodiment, the averages, the variation amounts, and the variation directions are calculated over the same time range. However, calculation need not necessarily be carried out over the same time range but different time ranges may individually be selected for the respective signal variation patterns.

Turning back to Fig. 6, the calculating section 17 determines whether or not judgement upon the sector switching operation is started considering the signal variation patterns calculated in the step 22 (step 23). Determination is carried out under the following condition. Specifically, if the reception level of a monitor sector (hereinafter will be referred to as M_SECTOR) which is not connected but monitored becomes greater than the reception level of an active sector (hereinafter will be referred to as A_SECTOR) which is currently connected (upon establishment of a level switching condition) and if the conditions of hysteresis and time-to-trigger described in conjunction with the prior art are satisfied, the step 23 proceeds to a step 24 (which will later be described) to start the judgment upon the sector switching operation. Otherwise, the step 23 returns to the step 21 to start measurement of the reception levels again.

In this embodiment, the above-mentioned condition is applied to the determination in the step 23. However, the condition may be modified in various manners. For example, use may be made of (1) the level switching condition alone (only if the reception level of M_SECTOR becomes greater than the reception level of A_SECTOR), (2) the hysteresis alone (only if a difference between the reception level of M_SECTOR and the reception level of A_ SECTOR becomes greater than a predetermined value), (3) a combination of the level switching condition and the hysteresis (if the reception level of M_ SECTOR becomes greater than the reception level of A_SECTOR and thereafter the difference between the reception level of M_SECTOR and the reception level of A_SECTOR becomes greater than the predetermined value), or (4) a combination of the level switching condition and the time-to-trigger (if the reception level of M_SECTOR becomes greater than the reception level of A_ SECTOR and thereafter a predetermined time has lapsed). Alternatively, the step 22 may proceed to the step 24 unconditionally.

The sector selection indicating section 18 compares the signal variation patterns of the sectors (step 24) and selects, as a selected sector, a particular sector suitable for connection with reference to a sector selection criterion as follows (step 25). Specifically, comparison is made between the signal variation patterns of A_SECTOR and M_SECTOR for which the level switching condition is established in the step 23. Then, one of the sectors which is superior in two or more of the three kinds of the signal variation patterns, i.e., the average, the variation amount, and the variation direction is selected. To be superior in average means a greater value of the average. To be superior in variation amount means a smaller value of the variation amount. To be superior in variation direction means a greater value of the variation direction, i.e., a longer period of the increasing direction.

If M_SECTOR is selected as a result of the above-mentioned comparison, the operation proceeds to a step 26 which will later be described. On the other hand, if A_SECTOR is selected, A_SECTOR is continuously connected without carrying out the sector switching operation and the operation returns to the step 21 to start measurement of the reception levels again.

Further, the sector selection indicating section 18 informs the result of judgment upon the sector switching operation through the base station to the network controller and the sector switching operation is carried out in response to the instruction transmitted from the network controller through the base station to the mobile information apparatus or the communication apparatus (step 26).

In this embodiment, switching over to the selected sector suitable for connection is carried out immediately. However, switching need not necessarily be carried out immediately. For example, the selected sector suitable for connection may be treated as one of candidate sectors to be connected to the mobile information apparatus or the communication apparatus.

Referring to Figs. 7, 8, and 9, the sector switching operation in this embodiment will be described in detail.

Fig. 7 shows the time change in reception level and in average with respect to each of the sectors whose reception levels are monitored by the mobile information terminal, together with the relationship between the two sectors in reception level and in average. Like Fig. 4 described in conjunction with the prior art, there are a sector 1 (reception level: thick solid line, average: thin solid line) dramatically changed in reception level and a sector 2 (reception level: thick dotted line, average: thin dotted line) stable in reception level. At a time instant 30 in Fig. 7, the sector 1 is a connected sector or A_SECTOR while the sector 2 is a monitored sector or M_SECTOR.

Fig. 8 shows time change in variation amount with respect to each of the sectors whose reception levels are monitored, together with the relationship in variation amount between the two sectors. Fig. 9 shows time change in variation direction of each of the sectors whose reception levels are monitored, together with the relationship in variation direction between the two sectors.

At a time instant 31 in Fig. 7, the reception level of the sector 2 (M_ SECTOR) becomes greater than the reception level of the sector 1 (A_ SECTOR) and the level switching condition is established. At a time instant 32, the hysteresis and the time-to-trigger conditions are established and the judgment upon the sector switching operation is started in the step 23 in Fig. 6. Referring to Figs. 7, 8, and 9, the sector 2 (M_SECTOR) is superior than the sector 1 (A_SECTOR) at the time instant 32 in all of the average, the variation amount, and the variation direction. That is, in Fig. 7, the average (thin dotted line) of the sector 2 is greater than the average (thin solid line) of the sector 1. In Fig. 8. the variation amount (dotted line) of the sector 2 is smaller than the variation amount (solid line) of the sector 1. In Fig. 9, the variation direction (dotted line) of the sector 2 is greater than the variation direction (solid line) of the sector 1. Therefore, the sector 2 (M_SECTOR) is selected in the step 25 in Fig. 6 and the connected sector or A_SECTOR is switched from the sector 1 to the sector 2 in the step 26 in Fig. 6. Now, the sector 1 is the M_SECTOR while the sector 2 is the A_SECTOR.

At a time instant 33 in Fig. 7, the reception level of the sector 1 (M_ SECTOR) becomes greater than the reception level of the sector 2 (A_ SECTOR) and the level switching condition is established again. At a time instant 34, the hysteresis and the time-to-trigger conditions are established and the judgment upon the sector switching operation is started in the step 23 in Fig. 6. Referring to Figs. 7, 8, and 9, however, the sector 2 (A_SECTOR) is still superior than the sector 1 (M_SECTOR) at the time instant 34 in all of the average, the variation amount, and the variation direction. That is, in Fig. 7, the average (thin dotted line) of the sector 2 is greater than the average (thin solid line) of the sector 1. In Fig. 8, the variation amount (dotted line) of the sector 2 is smaller than the variation amount (solid line) of the sector 1. In Fig. 9, the variation direction (dotted line) of the sector 2 is greater than the variation direction (solid line) of the sector 1. Therefore, the sector 2 (A_SECTOR) is selected in the step 25 in Fig. 6 and the sector switching operation is not carried out.

At the time instant 35 in Fig. 7, the reception level of the sector 1 (M_ SECTOR) becomes greater than the reception level of the sector 2 (A_ SECTOR). Therefore, the level switching condition is established third time. Further, at the time instant 36, the hysteresis and the time-to-trigger conditions are established and the judgment upon the sector switching operation is started in the step 23 in Fig. 6. Referring to Figs. 7, 8, and 9, however, at the time instant 36, the sector 1 (M_SECTOR) is superior in average than the sector 2 (A_ SECTOR) but the sector 2 (A_SECTOR) is still superior than the sector 1 (M_ SECTOR) in other two parameters of the variation amount and the variation direction. That is, in Fig. 7, the average (thin dotted line) of the sector 2 is smaller than the average (thin solid line) of the sector 1. In Fig. 8, the variation amount (dotted line) of the sector 2 is smaller than the variation amount (solid line) of the sector 1. In Fig. 9, the variation direction (dotted line) of the sector 2 is greater than the variation direction (solid line) of the sector 1. Therefore, the sector 2 (A_SECTOR) is selected in the step 25 in Fig. 6 and the sector switching operation is not carried out.

Thus, in a time zone shown in Fig. 7, the mobile information terminal of this embodiment is continuously connected to the sector 2 stable in reception level after the switching from the sector 1 to the sector 2 is carried out at the time instant 32. On the other hand, in the prior art illustrated in Fig. 4, the sector switching operation is carried out at every reversal of the relationship between the reception levels of the sector 1 and the sector 2. As compared with the prior art shown in Fig. 4, the mobile information terminal of this embodiment can be continuously connected to the sector stable in reception level and the frequency of the sector switching operation is considerably suppressed.

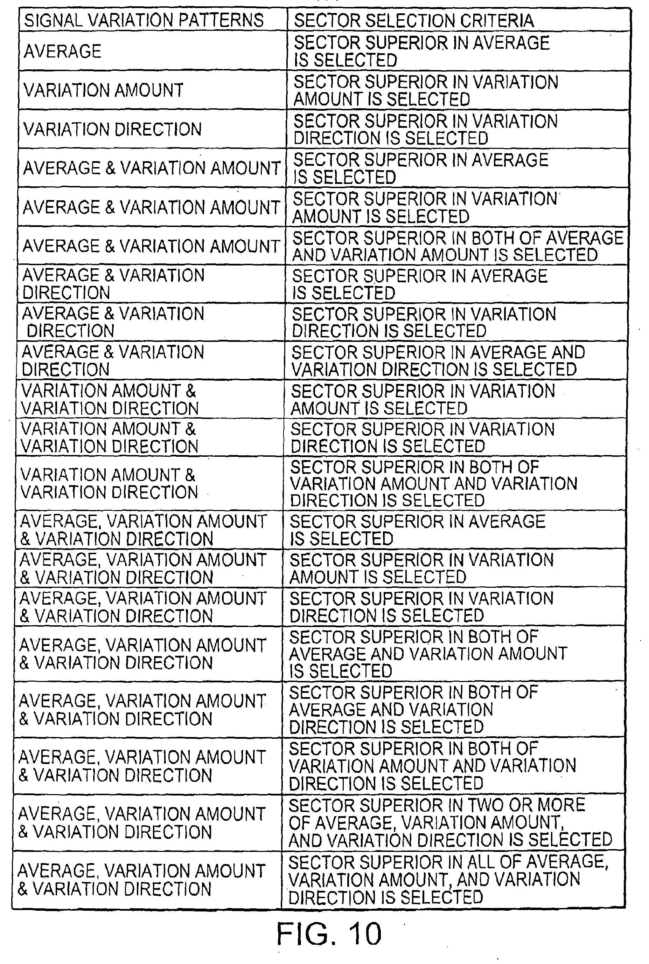

In this embodiment, the average, the variation amount, and the variation direction are calculated as the signal variation patterns in the step 22. In the step 25, as the sector selection criterion, a sector superior in two or more of the three kinds of the signal variation patterns is selected However, a combination of the signal variation patterns calculated in the step 22 and the sector selection criterion in the step 25 is not restricted to that described in this embodiment. Depending upon the environment and the communication condition, any one of combinations shown in Fig. 10 may be selected.

The predetermined time range over which the signal variation patterns are calculated may be variable. For example, the time range for calculation of the signal variation patterns may be changed depending upon the moving speed of the mobile communication apparatus (mobile information terminal). If the moving speed is high and low, the time range may be shortened and lengthened, respectively. In order to measure the moving speed, the mobile communication apparatus (mobile information terminal) may utilize the relationship between a variation cycle of the reception signal level and a moving distance.

As described above, with the communication apparatus, the communication system, and the sector selecting method for the communication apparatus, it is possible to suppress the frequency of unnecessary switching operations even in an environment where a sector dramatically changed in reception level is present, for example, during driving, in an urban center, and at a busy street densely built up and to continuously select a sector stable in reception level without selecting a sector exhibiting a dramatic change in reception level, such as a temporary increase in reception level.

By suppressing the unnecessary sector switching operation, it is possible to reduce a network load, to effectively utilize a line capacity, and to reduce power consumption of the communication apparatus. In particular, by reducing the power consumption, it is possible to extend a possible standby time (during which an idle state can be continued) of the communication apparatus.

in data communication using a channel in which the sector switching operation by soft handover is not carried out, for example, a forward access channel (FACH), a random access channel (RACH), a common packet channel (CPCH), and a downlink shared channel (DSCH), the time of interruption of the data communication is shortened and, as a result, the data communication rate can be improved.

Further, by continuously selecting the sector stable in reception level, it is possible to prevent a decrease in communication quality, such as increase in call loss.

While this invention has thus far been described in conjunction with the preferred embodiment thereof, it will be readily possible for those skilled in the art to put this invention into practice in various other manners without departing from the scope set forth in the appended claims.

## Claims

1. A communication apparatus (70) for communicating with a plurality of base stations (1, 2 , ..., n) in an area covered by a plurality of sectors corresponding to said base stations (1,2, ..., n), respectively, said communication apparatus (70) comprising:
receiving means (11, 12) for receiving signals from said sectors;
calculating means (17) for calculating a plurality of kinds of variation patterns for each of the signals from said sectors; and
selecting means (18) for selecting, as a selected sector, a particular sector suitable for connection with reference to a relationship among said sectors in said plurality of kinds of variation patterns,
wherein said plurality of kinds of variation patterns are an average reception level of each of the signals from said sectors over a predetermined time range, a variation amount of each of the signals from said sectors over the predetermined time range, and a variation direction of each of the signals from said sectors over the predetermined time range,
wherein said selecting means (18) selects, as said particular sector, a sector superior in said average reception level, said variation amount, and said variation direction, and
wherein said variation amount is obtained by calculating a difference between a current measured value and a previous measured value of a reception level of each of the signals from said sectors and summing up absolute values of the differences over the predetermined time range.

2. A communication apparatus as claimed in claim 1, wherein said predetermined time range is variable and determined with reference to a moving speed of said communication apparatus.

3. A sector selecting method for a communication apparatus (70) for communicating with a plurality of base stations (1, 2 , ..., n) in an area covered by a plurality of sectors corresponding to said base stations (1, 2 , ..., n), respectively, said method comprising:
a receiving step of receiving signals from said sectors;
a calculating step (22) of calculating a plurality of kinds of variation patterns for each of the signals from said sectors, respectively; and
a selecting step (25) of selecting, as a selected sector, a particular sector suitable for connection with reference to a relationship among said sectors said plurality of kinds of in variation patterns,
wherein said plurality of kinds of variation patterns are an average reception level of each of the signals of said sectors over a predetermined time range, a variation amount of each of the signals of said sectors over the predetermined time range, and a variation direction of each of the signals of said sectors over the predetermined time range,
wherein said selecting step (25) selects, as said particular sector, a sector superior in said average reception level, said variation amount, and said variation direction, and
wherein said variation amount is obtained by calculating a difference between a current measured value and a previous measured value of a reception level of each of the signals from said sectors and summing up absolute values of the differences over the predetermined time range.

4. A sector selecting method as claimed in claim 3, wherein wherein said predetermined time range is variable and determined with reference to a moving speed of said communication apparatus.

## Patentansprüche

1. Kommunikationsvorrichtung (70) zur Kommunikation mit einer Mehrzahl von Basisstationen (1, 2, ..., n) in einem Bereich, der von einer Mehrzahl von Sektoren abgedeckt ist, die jeweils den Basisstationen (1, 2, ..., n) entsprechen, wobei die Kommunikationsvorrichtung (70) Folgendes aufweist:
ein Empfangsmittel (11, 12) zum Empfangen von Signalen aus den Sektoren;
ein Berechnungsmittel (17) zum Berechnen einer Mehrzahl von Arten von Abweichungsmustern für jedes der Signale aus den Sektoren; und
ein Auswahlmittel (18) zum Auswählen, als ausgewählter Sektor, eines bestimmten Sektors, der für eine Verbindung in Bezug auf ein Verhältnis unter den Sektoren in der Mehrzahl von Arten von Abweichungsmustern geeignet ist,
wobei die Mehrzahl von Arten von Abweichungsmustern ein durchschnittliches Empfangsniveau eines jeden der Signale aus den Sektoren über eine vorgegebene Zeitspanne, eine Abweichungsmenge eines jeden der Signale aus den Sektoren über die vorgegebene Zeitspanne und eine Abweichungsrichtung eines jeden der Signale aus den Sektoren über die vorgegebene Zeitspanne ist,
wobei das Auswahlmittel (18), als bestimmten Sektor, einen Sektor auswählt, der bei dem durchschnittlichen Empfangsniveau, der Abweichungsmenge und der Abweichungsrichtung überlegen ist, und
wobei die Abweichungsmenge durch Berechnen einer Differenz zwischen einem aktuellen gemessenen Wert und einem vorherigen gemessenen Wert eines Empfangsniveaus eines jeden der Signale aus den Sektoren und durch Addieren von absoluten Werten der Differenzen über die vorgegebene Zeitspanne erhalten wird.

2. Kommunikationsvorrichtung nach Anspruch 1, wobei die vorgegebene Zeitspanne variabel ist und in Bezug auf eine Bewegungsgeschwindigkeit der Kommunikationsvorrichtung bestimmt wird.

3. Sektorauswahlverfahren für eine Kommunikationsvorrichtung (70) zur Kommunikation mit einer Mehrzahl von Basisstationen (1, 2, ..., n) in einem Bereich, der von einer Mehrzahl von Sektoren abgedeckt ist, die jeweils den Basisstationen (1, 2, ..., n) entsprechen, wobei das Verfahren Folgendes aufweist:
einen Empfangsschritt zum Empfangen von Signalen aus den Sektoren;
einen Berechnungsschritt (22) zum Berechnen einer Mehrzahl von Arten von Abweichungsmustern für jeweils jedes der Signale aus den Sektoren; und
einen Auswahlschritt (25) zum Auswählen, als ausgewählter Sektor, eines bestimmten Sektors, der für eine Verbindung in Bezug auf ein Verhältnis unter den Sektoren in der Mehrzahl von Arten von Abweichungsmustern geeignet ist,
wobei die Mehrzahl von Arten von Abweichungsmustern ein durchschnittliches Empfangsniveau eines jeden der Signale aus den Sektoren über eine vorgegebene Zeitspanne, eine Abweichungsmenge eines jeden der Signale der Sektoren über die vorgegebene Zeitspanne und eine Abweichungsrichtung eines jeden der Signale der Sektoren über die vorgegebene Zeitspanne ist,
wobei der Auswahlschritt (25), als bestimmten Sektor, einen Sektor auswählt, der bei dem durchschnittlichen Empfangsniveau, der Abweichungsmenge und der Abweichungsrichtung überlegen ist, und
wobei die Abweichungsmenge durch Berechnen einer Differenz zwischen einem aktuellen gemessenen Wert und einem vorherigen gemessenen Wert eines Empfangsniveaus eines jeden der Signale aus den Sektoren und durch Addieren von absoluten Werten der Differenzen über die vorgegebene Zeitspanne erhalten wird.

4. Sektorauswahlverfahren nach Anspruch 3, wobei die vorgegebene Zeitspanne variabel ist und in Bezug auf eine Bewegungsgeschwindigkeit der Kommunikationsvorrichtung bestimmt wird.

## Revendications

1. Un appareil de communication (70) pour communiquer avec une pluralité de stations de base (1, 2, ? , n) dans une zone couverte par une pluralité de secteurs correspondant respectivement auxdites stations de base (1, 2,..., n), ledit appareil de communication (70) comprenant :
un moyen de réception (11, 12) pour recevoir des signaux en provenance desdits secteurs ;
un moyen de calcul (17) pour calculer une pluralité de sortes de profils de variation pour chacun des signaux en provenance desdits secteurs ; et
un moyen de sélection (18) pour la sélection d'un secteur spécifique, qui convient comme secteur choisi pour être connecté par rapport à une relation entre lesdits secteurs dans ladite pluralité de sortes de profils de variation,
où ladite pluralité de sortes de profils de variation est composée du niveau de réception moyen de chacun des signaux desdits secteurs au cours d'un intervalle de temps prédéterminé, d'un taux de variation de chacun des signaux desdits secteurs au cours de l'intervalle de temps prédéterminé et de la direction de la variation de chacun des signaux desdits secteurs sur l'intervalle de temps prédéterminé,
où ledit moyen de sélection (18) choisit comme ledit secteur particulier, un secteur dont ledit niveau moyen de réception, ledit taux de variation et ladite direction de la variation sont supérieurs, et
où ledit taux de variation est obtenu en calculant une différence entre une valeur mesurée actuelle et une valeur mesurée précédente d'un niveau de réception de chacun des signaux provenant desdits secteurs et en additionnant les valeurs absolues des différences au cours de l'intervalle de temps prédéterminé.

2. Un appareil de communication selon la revendication 1 où ledit intervalle de temps prédéterminé est variable et déterminé par rapport à une vitesse de déplacement dudit dispositif de communication.

3. Une méthode pour la sélection d'un secteur pour un appareil de communication (70) pour communiquer avec une pluralité de stations de base (1, 2,..., n) dans une zone couverte par une pluralité de secteurs correspondant respectivement auxdites stations de base (1, 2,..., n), ladite méthode comprenant :
une étape de réception de la réception de signaux provenant desdits secteurs ;
une étape de calcul (22) de calculer une pluralité de sortes de profils de variation pour chacun des signaux desdits secteurs, respectivement ; et
une étape de sélection (25) de la sélection d'un secteur spécifique, qui convient comme secteur choisi pour être connecté par rapport à une relation entre lesdits secteurs dans ladite pluralité de sortes de profils de variation,
où ladite pluralité de sortes de profils de variation est composée du niveau de réception moyen de chacun des signaux desdits secteurs au cours d'un intervalle de temps prédéterminé, d'un taux de variation de chacun des signaux desdits secteurs au cours de l'intervalle de temps prédéterminé et de la direction de la variation de chacun des signaux desdits secteurs sur l'intervalle de temps prédéterminé,
où ledit moyen de sélection (18) choisit comme ledit secteur particulier, un secteur dont ledit niveau moyen de réception, ledit taux de variation et ladite direction de la variation sont supérieurs, et
où ledit taux de variation est obtenu en calculant une différence entre une valeur mesurée actuelle et une valeur mesurée précédente d'un niveau de réception de chacun des signaux provenant desdits secteurs et en additionnant les valeurs absolues des différences au cours de l'intervalle de temps prédéterminé.

4. Une méthode pour la sélection d'un secteur selon la revendication 3, où ledit intervalle de temps prédéterminé est variable et déterminé par rapport à une vitesse de déplacement dudit dispositif de communication.
